# EUROPEAN PATENT APPLICATION

(11) **EP 4 765 916 A1**
(43) Date of publication of application: **24.06.2026**
(21) Application number: 24870303.5
(22) Date of filing: 28.08.2024
(51) Int. Cl.: H04W 12/106

(54) **COMMUNICATION METHOD AND APPARATUS**

(30) Priority: 27.09.2023 CN 202311283845
(71) Applicant: HUAWEI TECHNOLOGIES CO., LTD., Shenzhen, Guangdong 518129 (CN)
(72) Inventor: HU, Xiange, Shenzhen, Guangdong 518129 (CN); XU, Ling, Shenzhen, Guangdong 518129 (CN); FAN, Jing, Shenzhen, Guangdong 518129 (CN); LIU, Yanjiao, Shenzhen, Guangdong 518129 (CN); WEN, Xiao, Shenzhen, Guangdong 518129 (CN)
(74) Representative: Körber, Martin Hans
(86) International application number: PCT/CN2024/115266
(87) International publication number: WO 2025/066757

(57) **Abstract**

This application relates to the field of communication technologies, and discloses a communication method and apparatus. The method includes: A terminal device sends a first deregistration request message to a network device, and receives a security mode command message from the network device, where the security mode command message is used to enable a first security context; sends a response message of the security mode command message to the network device based on the security mode command message, and enables the first security context; receives a response message of the first deregistration request message from the network device; and attempts to perform integrity protection verification on the response message of the deregistration request message based on a current NAS security context (first security context) and a non-current NAS security context (second security context). Therefore, when a security mode control procedure conflicts with a deregistration procedure, this helps ensure that the terminal device completes deregistration.

## Description

### CROSS-REFERENCE TO RELATED APPLICATIONS

This application claims priority to Chinese Patent Application No. 202311283845.1, filed with the China National Intellectual Property Administration on September 27, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

A 5G mobility management (mobility management, MM) common procedure (5GMM common procedure) may include an identity authentication procedure, an authentication procedure, a security mode control (security mode control) procedure, and the like of a terminal device. The security mode control procedure may be performed in a specified procedure (for example, a registration procedure or a service procedure). Because a deregistration procedure may be further performed in the specified procedure, the security mode control procedure may conflict with the deregistration procedure. For example, when the terminal device sends a deregistration request message to a network device, the network device sends a security mode command message to the terminal device. Consequently, the security mode control procedure conflicts with the deregistration procedure.

However, when the security mode control procedure conflicts with the deregistration procedure, how the terminal device completes deregistration still needs to be further studied.

### SUMMARY

This application provides a communication method and apparatus, to resolve a problem that a terminal device cannot complete deregistration when a security mode control procedure conflicts with a deregistration procedure.

**According to a first aspect,** this application provides a communication method. The method may be applied to a terminal device, or a processor, a chip, a chip system (for example, a system-on-chip (system-on-a-chip, SoC)), a functional module, or the like in the terminal device. For example, the method is applied to the terminal device. The terminal device sends a first deregistration request message to a network device, where the first deregistration request message is used by the terminal device to request deregistration; receives a security mode command message from the network device, where the security mode command message is used to enable a first security context; and if the security mode command message is received in a deregistration process, ignores the security mode command message.

According to the foregoing method, when a security mode control procedure conflicts with a deregistration procedure, the terminal device may ignore the security mode command message (that is, interrupt the security mode control procedure), so that behavior of the terminal device is consistent with that of the network device. This helps ensure that the terminal device completes deregistration.

In a possible design, the ignoring the security mode command message includes: skipping sending a response message of the security mode command message, and/or skipping enabling the first security context.

In a possible design, the method further includes: receiving a response message of the first deregistration request message from the network device; and performing integrity protection verification on the response message based on an enabled second security context of the terminal device.

In a possible design, the first deregistration request message does not carry a first ciphertext information element.

**According to a second aspect,** this application provides a communication method. The method may be applied to a terminal device, or a processor, a chip, a chip system (for example, an SoC), a functional module, or the like in the terminal device. For example, the method is applied to the terminal device. The terminal device sends a first deregistration request message to a network device, where the first deregistration request message is used by the terminal device to request deregistration; receives a security mode command message from the network device, where the security mode command message is used to enable a first security context; sends a response message of the security mode command message to the network device based on the security mode command message, and enables the first security context; receives a response message of the first deregistration request message from the network device; if the security mode command message is received in a deregistration process, performs integrity protection verification on the response message of the first deregistration request message based on the first security context; and when integrity protection verification performed on the response message of the first deregistration request message based on the first security context fails, performs integrity protection verification on the response message of the first deregistration request message based on a second security context, where the second security context is a security context that has been enabled before the terminal device enables the first security context.

According to the foregoing method, when a security mode control procedure conflicts with a deregistration procedure, the terminal device may attempt to perform integrity protection verification on a deregistration accept message based on a current NAS security context and a non-current NAS security context, to ensure that the terminal device completes deregistration.

In a possible design, the method further includes: if integrity protection verification performed on the response message of the first deregistration request message based on the second security context fails, performing local deregistration; or if integrity protection verification performed on the response message of the first deregistration request message based on the second security context fails, sending a second deregistration request message to the network device, where the second deregistration request message is used by the terminal device to request deregistration.

**According to a third aspect,** this application provides a communication method. The method may be applied to a terminal device, or a processor, a chip, a chip system (for example, an SoC), a functional module, or the like in the terminal device. For example, the method is applied to the terminal device. The terminal device sends a first deregistration request message to a network device, where the first deregistration request message is used by the terminal device to request deregistration; receives a security mode command message from the network device, where the security mode command message is used to enable a first security context; sends a response message of the security mode command message to the network device based on the security mode command message, and enables the first security context; receives a response message of the first deregistration request message from the network device; and if the security mode command message is received in a deregistration process, performs integrity protection verification on the response message of the first deregistration request message based on a second security context, where the second security context is a security context that has been enabled before the terminal device enables the first security context.

In a possible design, the method further includes: if integrity protection verification performed on the response message of the first deregistration request message based on the second security context fails, performing integrity protection verification on the response message of the first deregistration request message based on the first security context.

According to the foregoing method, when a security mode control procedure conflicts with a deregistration procedure, the terminal device may attempt to perform integrity protection verification on a deregistration accept message based on a current NAS security context and a non-current NAS security context, to ensure that the terminal device completes deregistration.

In a possible design, the method further includes: if integrity protection verification performed on the response message of the first deregistration request message based on the first security context fails, performing local deregistration; or if integrity protection verification performed on the response message of the first deregistration request message based on the first security context fails, sending a second deregistration request message to the network device, where the second deregistration request message is used by the terminal device to request deregistration.

**According to a fourth aspect,** this application provides a communication method. The method may be applied to a terminal device, or a processor, a chip, a chip system (for example, an SoC), a functional module, or the like in the terminal device. For example, the method is applied to the terminal device. The terminal device sends a first deregistration request message to a network device, where the first deregistration request message is used by the terminal device to request deregistration; receives a security mode command message from the network device, where the security mode command message is used to enable a first security context; sends a response message of the security mode command message to the network device based on the security mode command message, and enables the first security context; receives a response message of the first deregistration request message from the network device; and if the security mode command message is received in a deregistration process, and the response message of the first deregistration request message is a ciphertext message, performs integrity protection verification on the response message of the first deregistration request message based on the first security context; or if the security mode command message is received in the deregistration process, and the response message of the first deregistration request message is a plaintext message, enters a deregistration state.

According to the foregoing method, when a security mode control procedure conflicts with a deregistration procedure, the terminal device may determine, based on whether a deregistration accept message is in plaintext, whether to perform integrity protection verification on the deregistration accept message based on a current NAS security context, to ensure that the terminal device completes deregistration.

**According to a fifth aspect,** this application provides a communication method. The method may be applied to a terminal device, or a processor, a chip, a chip system (for example, an SoC), a functional module, or the like in the terminal device. For example, the method is applied to the terminal device. The terminal device sends a first deregistration request message to a network device, where the first deregistration request message is used by the terminal device to request deregistration; receives a security mode command message from the network device, where the security mode command message is used to enable a first security context; and if the security mode command message is received in a deregistration process and the first deregistration request message does not carry a first ciphertext information element, ignores the security mode command message; or if the security mode command message is received in the deregistration process and the first deregistration request message carries the first ciphertext information element, sends a response message of the security mode command message to the network device, and enables the first security context.

According to the foregoing method, the terminal device may determine, based on whether the first deregistration request message carries the first ciphertext information element, whether to interrupt a security mode control procedure, so that the terminal device can be prevented from interrupting the security mode control procedure triggered by the network device because the network device fails to perform integrity protection verification on the first ciphertext information element. This helps the terminal device complete deregistration.

In a possible design, the ignoring the security mode command message includes: skipping enabling the first security context, and/or skipping sending a response message of the security mode command message.

In a possible design, when the ignoring the security mode command message is performed, the method further includes: receiving a response message of the first deregistration request message from the network device; and when the response message of the first deregistration request message is a ciphertext message, performing integrity protection verification on the response message based on an enabled second security context of the terminal device; or when the response message of the first deregistration request message is a plaintext message, entering a deregistration state.

In a possible design, when the enabling the first security context is performed, the method further includes: receiving a response message of the first deregistration request message from the network device; performing integrity protection verification on the response message of the first deregistration request message based on the first security context; and performing integrity protection verification on the response message of the first deregistration request message based on a second security context when integrity protection verification performed on the response message of the first deregistration request message based on the first security context fails, where the second security context is a security context that has been enabled before the terminal device enables the first security context.

In a possible design, the method further includes: if integrity protection verification performed on the response message of the first deregistration request message based on the second security context fails, performing local deregistration; or if integrity protection verification performed on the response message of the first deregistration request message based on the second security context fails, sending a second deregistration request message to the network device, where the second deregistration request message is used by the terminal device to request deregistration.

**In** a possible design, when the enabling the first security context is performed, the method further includes: receiving a response message of the first deregistration request message from the network device; performing integrity protection verification on the response message of the first deregistration request message based on a second security context, where the second security context is a security context that has been enabled before the terminal device enables the first security context.

In a possible design, the method further includes: if integrity protection verification performed on the response message of the first deregistration request message based on the second security context fails, performing integrity protection verification on the response message of the first deregistration request message based on the first security context.

In a possible design, the method further includes: if integrity protection verification performed on the response message of the first deregistration request message based on the first security context fails, performing local deregistration; or if integrity protection verification performed on the response message of the first deregistration request message based on the first security context fails, sending a second deregistration request message to the network device, where the second deregistration request message is used by the terminal device to request deregistration.

In a possible design, when the enabling the first security context is performed, the method further includes: receiving a response message of the first deregistration request message from the network device; and when the response message of the first deregistration request message is a ciphertext message, performing integrity protection verification on the response message of the first deregistration request message based on the first security context; or when the response message of the first deregistration request message is a plaintext message, entering a deregistration state.

In a possible design, the response message of the security mode command message includes a second ciphertext information element, the second ciphertext information element and the first ciphertext information element correspond to same plaintext information, and the second ciphertext information element is obtained based on the first security context.

**According to a sixth aspect,** this application provides a communication method. The method may be applied to a terminal device, or a processor, a chip, a chip system (for example, an SoC), a functional module, or the like in the terminal device. For example, the method is applied to the terminal device. The terminal device sends a first deregistration request message to a network device, where the first deregistration request message is used by the terminal device to request deregistration; receives a security mode command message from the network device, where the security mode command message is used to enable a first security context; and performs local deregistration if the security mode command message is received before a deregistration procedure is completed.

According to the foregoing method, when a security mode control procedure conflicts with the deregistration procedure, the terminal device may perform local deregistration, to ensure that the terminal device completes deregistration.

In a possible design, the method further includes: ignoring the security mode command message.

In a possible design, the ignoring the security mode command message includes: skipping enabling the first security context, and/or skipping sending a response message of the security mode command message.

In a possible design, the first deregistration request message does not carry a first ciphertext information element.

**According to a seventh aspect,** this application provides a communication method. The method may be applied to a network device, or a processor, a chip, a chip system (for example, an SoC), a functional module, or the like in the network device. For example, the method is applied to the network device. The network device sends a security mode command message to a terminal device, where the security mode command message is used to enable a first security context; receives a first deregistration request message from the terminal device in a process of waiting to receive a response message of the security mode command message, where the first deregistration request message is used by the terminal device to request deregistration; receives the response message of the security mode command message from the terminal device; enables the first security context based on the response message of the security mode command message; and sends a response message of the first deregistration request message to the terminal device, where the response message of the first deregistration request message is a ciphertext message obtained based on the first security context.

According to the foregoing method, when a security mode control procedure conflicts with a deregistration procedure, the network device does not interrupt the security mode control procedure, to ensure that the terminal device completes deregistration.

In a possible design, the method further includes: if the first deregistration request message carries a first ciphertext information element, continuing waiting to receive the response message of the security mode command message.

**According to an eighth aspect,** this application provides a communication method. The method may be applied to a network device, or a processor, a chip, a chip system (for example, an SoC), a functional module, or the like in the network device. For example, the method is applied to the network device. The network device receives a first deregistration request message from a terminal device, where the first deregistration request message is used by the terminal device to request deregistration, and the first deregistration request message carries a first ciphertext information element; if integrity protection verification performed on the first ciphertext information element based on a second security context fails, sends a security mode command message to the terminal device, where the security mode command message is used to enable a first security context; receives a response message of the security mode command message from the terminal device; enables the first security context based on the response message of the security mode command message; and sends the response message of the first deregistration request message to the terminal device, where the response message of the first deregistration request message is a ciphertext message obtained based on the first security context.

In a possible design, the response message of the security mode command message includes a second ciphertext information element, the second ciphertext information element and the first ciphertext information element correspond to same plaintext information, and the second ciphertext information element is obtained based on the first security context.

In a possible design, the method further includes:
sending an authentication request message to the terminal device, where the authentication request message is used to request the terminal device to create the first security context.

**According to a ninth aspect,** this application provides a communication apparatus. The communication apparatus has a function for implementing any one of the first aspect to the eighth aspect. For example, the communication apparatus includes a corresponding module, unit, or means for performing operations in any one of the first aspect to the eighth aspect. The function, the unit, or the means may be implemented by software, or may be implemented by hardware, or may be implemented by hardware executing corresponding software.

In a possible design, the communication apparatus includes a processing unit and a communication unit. The communication unit may be configured to receive and send a signal, to implement communication between the communication apparatus and another apparatus. For example, the communication unit is configured to send system information to a terminal. The processing unit may be configured to perform some internal operations of the communication apparatus. Functions performed by the processing unit and the communication unit may correspond to the operations in any one of the first aspect to the eighth aspect.

In a possible design, the communication apparatus includes a processor, and the processor may be coupled to a memory. The memory may store a computer program or instructions necessary for implementing the functions in any one of the first aspect to the eighth aspect. The processor may execute the computer program or the instructions stored in the memory. When the computer program or the instructions are executed, the communication apparatus is caused to implement the method according to any one of the possible designs or implementations of the first aspect to the eighth aspect.

In a possible design, the communication apparatus includes a processor and a memory, and the memory may store a computer program or instructions necessary for implementing the functions in any one of the first aspect to the eighth aspect. The processor may execute the computer program or the instructions stored in the memory. When the computer program or the instructions are executed, the communication apparatus is caused to implement the method according to any one of the possible designs or implementations of the first aspect to the eighth aspect.

In a possible design, the communication apparatus includes a processor and an interface circuit. The processor is configured to: communicate with another apparatus through the interface circuit, and perform the method according to any one of the possible designs or implementations of the first aspect to the eighth aspect.

It may be understood that in the ninth aspect, the processor may be implemented by hardware or software. When the processor is implemented by the hardware, the processor may be a logic circuit, an integrated circuit, or the like. When the processor is implemented by the software, the processor may be a general-purpose processor, and is implemented by reading software code stored in the memory. In addition, there may be one or more processors, and one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

**According to a tenth aspect,** this application provides a communication system. The communication system may include a terminal device and a network device. The terminal device is configured to perform the method according to any one of the possible designs or implementations of the first aspect to the sixth aspect. The network device is configured to: send a security mode command message to the terminal device; and send a response message of a first deregistration request message to the terminal device. Alternatively, the network device is configured to perform the method according to any one of the possible designs or implementations of the seventh aspect or the eighth aspect. The terminal device is configured to: send the first deregistration request message to the network device; and send the response message of the security mode command message to the network device.

**According to an eleventh aspect,** this application provides a computer-readable storage medium. The computer-readable storage medium stores a computer program (or computer-readable instructions). When a computer reads and executes a part or all of the computer-readable instructions, the method according to any one of the possible designs of the first aspect to the eighth aspect is performed.

For example, the computer-readable storage medium may be any usable medium that can be accessed by the computer. By way of example but not limitation, the computer-readable medium may include a non-transitory computer-readable medium, a random access memory (random access memory, RAM), a read-only memory (read-only memory, ROM), an electrically erasable programmable read-only memory (electrically EPROM, EEPROM), a CD-ROM or another optical disk storage, a magnetic disk storage medium or another magnetic storage device, or any other medium that can carry or store desired program code in a form of instructions or a data structure and that can be accessed by the computer.

**According to a twelfth aspect,** this application provides a computer program product. When a computer reads and executes the computer program product, the method according to any one of the possible designs of the first aspect to the eighth aspect is caused to be performed.

**According to a thirteenth aspect,** this application provides a chip (or a chip system). The chip includes a processor. The processor is coupled to a memory, and the memory stores a computer program. The processor is configured to invoke a part or all of the computer program in the memory, to cause the method according to any one of the possible designs of the first aspect to the eighth aspect to be performed.

### BRIEF DESCRIPTION OF DRAWINGS

FIG. 1A and FIG. 1B are diagrams of a network architecture;
FIG. 2 is a schematic flowchart of a 5G mobility management common procedure performed in a registration procedure;
FIG. 3 is a schematic flowchart of a conflict between a security mode control procedure and a deregistration procedure;
FIG. 4 is a diagram of a procedure corresponding to a communication method according to an embodiment of this application;
FIG. 5 is a diagram of a procedure corresponding to another communication method according to an embodiment of this application;
FIG. 6 is a diagram of a procedure corresponding to another communication method according to an embodiment of this application;
FIG. 7 is a diagram of a procedure corresponding to another communication method according to an embodiment of this application;
FIG. 8 is a diagram of a procedure corresponding to still another communication method according to an embodiment of this application;
FIG. 9 is an example block diagram of an apparatus according to an embodiment of this application; and
FIG. 10 is a diagram of a structure of a communication apparatus according to an embodiment of this application.

### DESCRIPTION OF EMBODIMENTS

The following describes technical solutions in embodiments of this application with reference to accompanying drawings in embodiments of this application. In the specification, the claims, and the accompanying drawings of this application, the terms "first", "second", and the like, and various other term numerals (if existent) are for distinguishing between similar objects, but are not necessarily for describing a specific order or sequence. It should be understood that the terms used in such a way is interchangeable in proper circumstances, so that embodiments described herein can be implemented in an order other than the order illustrated or described herein. In addition, the terms "include", "have" and any other variants thereof are intended to cover non-exclusive inclusion. For example, a process, method, system, product, or device that includes a list of steps or units is not necessarily limited to those steps or units that are expressly listed, but may include other steps or units that are not expressly listed or inherent to the process, method, product, or device.

The technical solutions provided in this application may be applied to various communication systems, such as a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

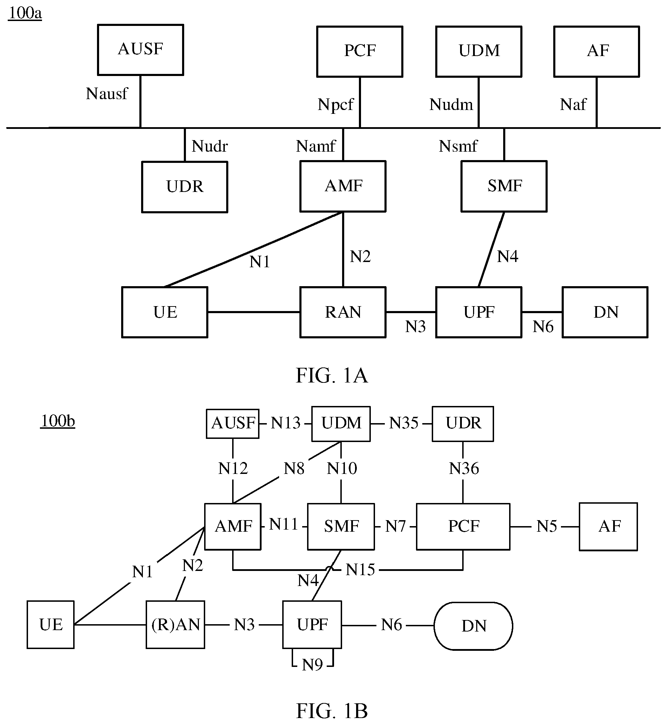

The following describes, by using examples with reference to FIG. 1A and FIG. 1B, a 5G system to which embodiments of this application are applicable. It should be understood that the 5G system described in this specification is merely an example, and should not constitute any limitation on this application. It should be further understood that some network elements in the 5G system may communicate with each other through a service-based interface or a point-to-point interface. The following separately describes a 5G system framework based on a point-to-point interface and a 5G system framework based on a service-based interface with reference to FIG. 1A and FIG. 1B.

By way of example for description, FIG. 1A is a diagram of a network architecture of a 5G system 100a to which an embodiment of this application is applicable. FIG. 1B is a diagram of a network architecture of a 5G system 100b based on a service-based interface. As shown in FIG. 1A, the network architecture may include but is not limited to the following network elements (or referred to as function network elements, function entities, nodes, devices, or the like):
a (radio) access network ((radio) access network, (R)AN) device, an access and mobility management function (access and mobility management function, AMF) network element, a session management function (session management function, SMF) network element, a user plane function (user plane function, UPF) network element, a policy control function (policy control function, PCF) network element, a unified data management (unified data management, UDM) network element, an application function (application function, AF) network element, a data network (data network, DN), an authentication server function (authentication server function, AUSF) network element, a unified data management (unified data management, UDM) network element, a unified data repository (unified data repository, UDR), and the like.

The following briefly describes the network elements shown in FIG. 1A.
1. User equipment (user equipment, UE) may be referred to as a terminal device (terminal equipment), a terminal apparatus, an access terminal, a subscriber unit, a subscriber station, a mobile station (mobile station, MS), a mobile terminal (mobile terminal, MT), a remote station, a remote terminal, a mobile device, a user terminal, a terminal, a wireless communication device, a user agent, or a user apparatus. The terminal may be a device that provides voice/data connectivity for a user, for example, a handheld device or a vehicle-mounted device that has a wireless connection function. Currently, some examples of the terminal may be: a mobile phone (mobile phone), a tablet computer (pad), a computer (for example, a notebook computer or a palmtop computer) having a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or a compute device having a wireless communication function, another processing device connected to a wireless modem, a vehicle-mounted device, a wearable device, a terminal device in a 5G network, a terminal in a future evolved public land mobile network (public land mobile network, PLMN), or the like.

In addition, the terminal may alternatively be a terminal in an internet of things (internet of things, IoT) system. IoT is an important part in future development of information technologies. A main technical feature of the IoT is to connect things to a network by using a communication technology, to implement an intelligent network for human-machine interconnection and thing-thing interconnection. The IoT technology can achieve massive connections, deep coverage, and terminal power saving by using, for example, a narrowband (narrowband, NB) technology.

In addition, the terminal may further include an intelligent printer, a train detector, and the like. Main functions include collecting data (some terminal devices), receiving control information and downlink data of a network device, and sending an electromagnetic wave to transmit uplink data to the network device.

It should be understood that the terminal may be any device that can access a network. The terminal and the access network device may communicate with each other by using an air interface technology.

Optionally, the terminal may be configured to act as a base station. For example, the terminal may act as a scheduling entity that provides a sidelink signal between terminals in V2X, D2D, or the like. For example, a cellular phone and an automobile communicate with each other by using a sidelink signal. The cellular phone communicates with a smart home device without relaying a communication signal via a base station.

2. The (radio) access network device is referred to as an access network device for short in embodiments of this application, is configured to provide a network access function for authorized user equipment in a specific area, and can use transmission tunnels with different quality of service based on a level of the user equipment, a service requirement, and the like.

The access network device can manage a radio resource, provide an access service for the user equipment, and further complete forwarding of a control signal and data between the user equipment and a core network. The access network device may alternatively be understood as a base station in a conventional network.

For example, the access network device in embodiments of this application may be any communication device having a wireless transceiver function for communicating with the user equipment. The access network device includes but is not limited to an evolved NodeB (evolved NodeB, eNB), a gNB or a transmission point (TRP or TP) in the 5G system, or one antenna panel or a group of antenna panels (including a plurality of antenna panels) of a base station in the 5G system, or may be a network node that forms a gNB or a transmission point, for example, a baseband unit (BBU) or a distributed unit (distributed unit, DU).

In some deployments, the gNB may include a central unit (centralized unit, CU) and a DU. The gNB may further include an active antenna unit (active antenna unit, AAU). The CU implements a part of functions of the gNB, and the DU implements a part of the functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements a part of physical layer processing functions, radio frequency processing, and a function related to an active antenna. Information at the RRC layer is eventually converted into information at the PHY layer, or is converted from information at the PHY layer. Therefore, in this architecture, higher layer signaling like RRC layer signaling may also be considered as being sent by the DU or sent by the DU and the AAU. It may be understood that the access network device may be a device including one or more of a CU node, a DU node, and an AAU node. In addition, the CU may be classified as an access network device in an access network, or the CU may be classified as an access network device in the core network (core network, CN). This is not limited in this application.
3. The UPF network element is configured for packet routing and forwarding, quality of service (quality of service, QoS) handling for user plane data, and the like.
4. The AMF network element, namely, the access and mobility management function network element, is mainly for mobility management, access management, and the like, and may be configured to implement a function in an MME function other than session management, for example, an access authorization/authentication function.
5. The SMF network element is mainly configured for session management, user equipment internet protocol (internet protocol, IP) address assignment and management, selection and control of a user plane function, termination of interfaces towards policy control and charging functions, downlink data notification, and the like.
6. The PCF network element is mainly configured to: support a unified policy framework to govern network behavior, provide policy rules to a control plane function network element (for example, the AMF or the SMF), and the like.
7. The AF network element is configured for application influence on traffic routing, wirelessly accessing a network exposure function network element, interacting with a policy framework for policy control, and the like.
8. The UDM network element is configured for UE identifier handling, access authentication, registration, mobility management, and the like.
9. The AUSF network element is configured for an authentication service, generating a key to implement bidirectional authentication on the user equipment, and support a unified authentication framework.
10. The UDR is configured to store subscription information of the UDM network element, policy information of the PCF network element, and the like.
11. The DN is a network located outside an operator network. The operator network may access a plurality of DNs, and a plurality of services may be deployed on the DN, to provide services such as data and/or voice for the terminal device. For example, the DN is a private network of a smart factory, a sensor mounted in a workshop of the smart factory may be a terminal device, a control server of the sensor is deployed in the DN, and the control server may serve the sensor. The sensor may communicate with the control server, to obtain instructions of the control server, transmit collected sensor data to the control server according to the instructions, and the like. For another example, the DN is an internal office network of a company, a mobile phone or a computer of an employee of the company may be the terminal device, and the mobile phone or the computer of the employee may access information, data resources, and the like on the internal office network of the company.

Nausf, Nnef, Npcf, Nudm, Naf, Namf, Nsmf, N1, N2, N3, N4, and N6 in FIG. 1A are interface sequence numbers. For meanings of the interface sequence numbers, refer to meanings defined in a 3GPP standard protocol. This is not limited herein.

In the network architecture shown in FIG. 1A, the network elements may communicate with each other through interfaces shown in the figure. For example, the UE and the AMF may interact with each other through an N1 interface, and an interaction message may be referred to as, for example, an N1 message (N1 Message). The RAN and the AMF may interact with each other through an N2 interface, and the N2 interface may be for sending a non-access stratum (non-access stratum, NAS) message and the like. The RAN and the UPF may interact with each other through an N3 interface, and the N3 interface may be for transmission of user plane data and the like. The SMF and the UPF may interact with each other through an N4 interface, and the N4 interface may be for transmission of information such as tunnel identifier information of an N3 connection, data buffering indication information, and a downlink data notification message. The UPF and the DN may interact with each other through an N6 interface, and the N6 interface may be for transmission of user plane data and the like. Relationships between other interfaces and network elements are shown in FIG. 1A. For brevity, details are not described herein.

FIG. 1B is a diagram of a 5G network architecture based on a point-to-point interface. For descriptions of functions of network elements in the figure, refer to descriptions of functions of corresponding network elements in FIG. 1A. Details are not described again. A main difference between FIG. 1B and FIG. 1A lies in that interfaces between the network elements in FIG. 1B are point-to-point interfaces rather than service-based interfaces.

In the architecture shown in FIG. 1B, names and functions of the interfaces between the network elements are as follows:
(1) N7 is an interface between a PCF and an SMF, and is configured to deliver a protocol data unit (protocol data unit, PDU) session granularity and service data flow granularity control policy.
(2) N15 is an interface between the PCF and an AMF, and is configured to deliver a UE policy and an access control-related policy.
(3) N5 is an interface between an AF and the PCF, and is configured to deliver an application service request and report a network event.
(4) N4 is an interface between the SMF and a UPF, and is configured for transmission of information between a control plane and a user plane, including delivery of a forwarding rule, a QoS control rule, a traffic statistics rule, and the like from the control plane to the user plane, and information reporting by the user plane.
(5) N11 is an interface between the SMF and the AMF, and is configured to: transfer PDU session tunnel information between a RAN and the UPF, transfer a control message sent to UE, transfer radio resource control information sent to the RAN, and the like.
(6) N2 is an interface between the AMF and the RAN, and is configured to transfer radio bearer control information from a core network side to the RAN, and the like.
(7) N1 is an interface between the AMF and the UE, is unrelated to access, and is configured to transfer a QoS control rule and the like to the UE.
(8) N8 is an interface between the AMF and a UDM, and is used by the AMF to obtain access and mobility management-related subscription data and authentication data from the UDM, and used by the AMF to register current mobility management-related information and the like of the UE with the UDM.
(9) N10 is an interface between the SMF and the UDM, and is used by the SMF to obtain session management-related subscription data from the UDM, and used by the SMF to register current session-related information and the like of the UE with the UDM.
(10) N35 is an interface between the UDM and a UDR, and is used by the UDM to obtain user subscription data information from the UDR.
(11) N36 is an interface between the PCF and the UDR, and is used by the PCF to obtain policy-related subscription data and application data-related information from the UDR.
(12) N12 is an interface between the AMF and an AUSF, and is used by the AMF to initiate an authentication procedure to the AUSF, where a subscription concealed identifier (subscription concealed identifier, SUCI) may be carried as a subscription identifier.
(13) N13 is an interface between the UDM and the AUSF, and is used by the AUSF to obtain a user authentication vector from the UDM, to perform the authentication procedure.

To facilitate understanding of embodiments of this application, the following describes some terms in this application by using examples. It may be understood that the following terms are described by using a 5G system as an example. However, it should be understood that in another communication system (for example, a future sixth-generation communication system), the following terms may have other names. This is not limited in this application.

### (1) 5G mobility management common procedure

The 5G mobility management common procedure may include an identity authentication procedure, an authentication procedure, a security mode control (security mode control) procedure, and the like of a terminal device. The 5G mobility management common procedure may be embedded in a specified procedure, that is, the 5G mobility management common procedure may be performed in the specified procedure. For example, the specified procedure includes a registration procedure, a service procedure, and the like.

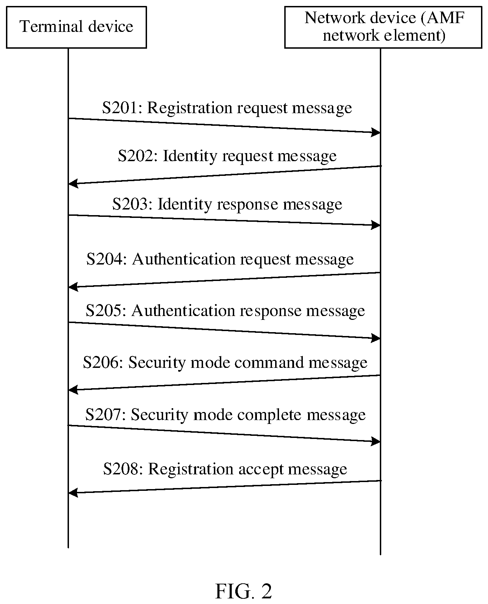

With reference to FIG. 2, the following describes a possible implementation by using an example in which a 5G mobility management common procedure is performed in a registration procedure.

FIG. 2 is a schematic flowchart of a 5G mobility management common procedure performed in a registration procedure. As shown in FIG. 2, the procedure may include the following steps.

S201: A terminal device sends a registration request (registration request) message to an AMF network element. Correspondingly, the AMF network element receives the registration request message.

Herein, the registration request message is a NAS message, and the registration request message may include a registration type. For example, the registration type may be initial registration (initial registration). Optionally, the registration request message further includes an SUCI. For example, the SUCI includes a subscription permanent identifier (subscription permanent identifier, SUPI) type, a home network identifier, a routing identifier, an SUPI protection algorithm identifier, and the like. The SUCI is an encrypted version of the SUPI, and is used to ensure that the SUPI is not disclosed on an air interface, and ensure normal authentication between the terminal device and a network.

It may be understood that the terminal device and the AMF network element may communicate with each other via an access network device. For example, the terminal device may send an RRC message to the access network device, where the RRC message includes the registration request message. Correspondingly, after receiving the RRC message, the access network device may forward the registration request message to the AMF network element.

S202: The AMF network element sends an identity request (identity request) message to the terminal device. Correspondingly, the terminal device receives the identity request message.

For example, if the AMF network element does not obtain the SUCI (for example, the terminal device does not provide the SUCI to the AMF network element, that is, the registration request message does not include the SUCI), the AMF network element may send the identity request message to the terminal device, where the identity request message is used to obtain the SUCI.

S203: The terminal device sends an identity response (identity response) message to the AMF network element, where the identity response message includes the SUCI.

S204: The AMF network element sends an authentication request (authentication request) message to the terminal device. Correspondingly, the terminal device receives the authentication request message.

Herein, after completing authentication on the terminal device, the AMF network element may derive a key (for example, an integrity protection key and an encryption key) used for secure communication between the AMF network element and the terminal device, to complete creation of a security context on an AMF side. Further, the AMF network element sends the authentication request message to the terminal device, to request to complete creation of a security context on a terminal device side.

For example, the authentication request message may carry a group of authentication parameters, and further carry a parameter used by the terminal device to create the security context.

S205: The terminal device sends an authentication response (authentication response) message to the AMF network element. Correspondingly, the AMF network element receives the authentication response message.

For example, after receiving the authentication request message, the terminal device may trigger an authentication algorithm to generate a group of parameters. If the group of parameters are consistent with the authentication parameters carried in the authentication request message, the terminal device may consider that the network is a legal network, and further complete authentication of the terminal device on the network. Further, the terminal device may create the security context based on the parameters used by the terminal device to create the security context. The terminal device may send an authentication result to the AMF network element via the authentication response message.

S206: The AMF network element sends a security mode command (security mode command, SMC) message to the terminal device. Correspondingly, the terminal device receives the security mode command message.

Herein, the security mode command message indicates the terminal device to enable the security context, so that security processing is performed on the NAS message.

For example, the security mode command message may include an identifier of the to-be-enabled security context.

S207: The terminal device sends a response message of the security mode command message to the AMF network element, where the response message is, for example, a security mode complete (security mode complete, SMP) message. Correspondingly, the AMF network element receives the security mode complete message, and enables the security context based on the security mode complete message (the security context enabled by the AMF network element is the same as that enabled by the terminal device).

S208: The AMF network element sends a response message of the registration request message, for example, a registration accept (registration accept) message, to the terminal device. Correspondingly, the terminal device receives the registration accept message.

It may be understood that S202 and S203 are steps in the identity authentication procedure, S204 and S205 are steps in the authentication procedure, and S206 and S207 are steps in the security mode control procedure. The identity authentication procedure, the authentication procedure, or the security mode control procedure may further include another possible step. For example, the AMF network element may further communicate with another core network element in the authentication procedure. This is not limited in embodiments of this application.

In addition, the foregoing is described by using an example in which the identity authentication procedure, the authentication procedure, and the security mode control procedure are performed in the registration procedure. In another possible scenario, any one or two of the identity authentication procedure, the authentication procedure, and the security mode control procedure may alternatively be performed in the registration procedure (or the service procedure). For example, if the registration request message includes the SUCI, the identity authentication procedure may not need to be performed.

### (2) Security context

The security context in embodiments of this application may be a non-access stratum (non-access stratum, NAS) security context. By performing the foregoing security mode control procedure, a terminal device and a network device may enable a same NAS security context, and perform communication based on the NAS security context, to improve security of communication between the terminal device and the network device.

For example, the NAS security context may include a key used for integrity protection/integrity protection verification, and optionally, further include a key used for encryption/decryption. The NAS security context may be identified by a key identifier. For example, the key identifier is a key set identifier for next generation radio access network (key set identifier for next generation radio access network, ngKSI). A NAS security context that is in use or in an active state may be referred to as a current NAS security context (current NAS security context), and a NAS security context that is not in use or in an inactive state may be referred to as a non-current NAS security context (non-current NAS security context).

The terminal device may store the NAS security context in a universal subscriber identity module (universal subscriber identity module, USIM) or a non-volatile memory (non-volatile memory) of the terminal device. For example, if the USIM of the terminal device supports storage of a registration management parameter, the terminal device may store the current NAS security context in the USIM, and mark the NAS security context stored in the USIM as valid (valid). If the USIM of the terminal device does not support storage of a registration management parameter, the terminal device may store the current NAS security context in the non-volatile memory, and mark the NAS security context stored in the non-volatile memory as valid.

For example, the registration request message may carry the ngKSI. If a value of the ngKSI is any one of 0 to 6, it indicates that a valid security context exists in the terminal device; or if a value of the ngKSI is 7, it indicates that no valid security context exists in the terminal device.

### (3) Deregistration procedure

The deregistration procedure may be triggered by a terminal device, or may be triggered by a core network element. The deregistration procedure triggered by the terminal device is used as an example. The terminal device may send a deregistration request message to an AMF network element (that is, the terminal device starts the deregistration procedure). The deregistration request message may include a deregistration type (for example, the deregistration type is normal or switch off). Correspondingly, after receiving the deregistration request message, the AMF network element may send a response message of the deregistration request message to the terminal device, where the response message is, for example, a deregistration accept message. If the terminal device establishes a PDU session, after receiving the deregistration request message, the AMF network element may send a session context release request message to the SMF network element, to release a session context of the terminal device, and send the deregistration accept message to the terminal device.

After receiving the deregistration accept message, the terminal device performs integrity protection verification on the deregistration accept message based on a security context, and decrypts the deregistration accept message after the integrity protection verification succeeds. After the decryption succeeds, the terminal device may consider that the deregistration procedure is completed, and enter a deregistration state. The deregistration state may be understood as a 5G mobility management deregistration (5GMM-deregistered) state. In the SGMM-deregistered state, a network device does not know a location of the terminal device, and cannot access the terminal device either.

It can be learned from the foregoing descriptions that the security mode control procedure may be performed in the specified procedure (for example, the registration procedure or the service procedure). Because the deregistration procedure may be further performed in the specified procedure, the security mode control procedure may conflict with the deregistration procedure. For example, when the terminal device sends the deregistration request message to the AMF network element, the AMF network element sends a security mode command message to the terminal device. Consequently, the security mode control procedure conflicts with the deregistration procedure. For example, from a perspective of the terminal device, if the terminal device receives the security mode command message in a deregistration process, the terminal device may determine that the security mode control procedure conflicts with the deregistration procedure. The deregistration process may be a process from starting the deregistration procedure (for example, sending the deregistration request message) by the terminal device to completing the deregistration procedure (for example, receiving the deregistration accept message) by the terminal device. From a perspective of the AMF network element, if the AMF network element receives the deregistration request message in a security mode control process, the AMF network element may determine that the security mode control procedure conflicts with the deregistration procedure. The security mode control process may be a process from starting the security mode control procedure (for example, sending the security mode command message) by the AMF network element to completing the security mode control procedure (that is, receiving the security mode complete message) by the AMF network element.

For the terminal device, it is stipulated in a current protocol that once the terminal device receives a security mode command message, the terminal device enables a new security context based on the security mode command message. Therefore, when the security mode control procedure conflicts with the deregistration procedure, the terminal device may enable a new security context based on the security mode command message, and perform integrity protection verification on the deregistration accept message based on the new security context.

For the AMF network element, it is stipulated in the current protocol that, when a security mode control procedure conflicts with a deregistration procedure, the AMF network element may interrupt the security mode control procedure. To be specific, the AMF network element skips enabling a new security context (maintains a previously enabled security context, or remains in plaintext if no security context is enabled previously), perform integrity protection on the deregistration accept message based on the previously enabled security context, and sends the deregistration accept message to the terminal device.

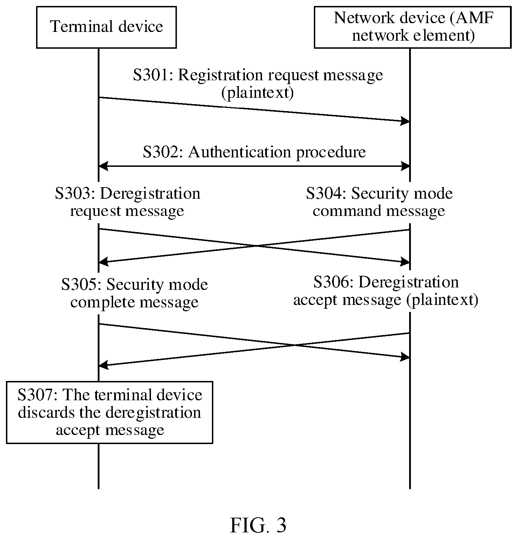

For example, FIG. 3 is a possible schematic flowchart of a conflict between a security mode control procedure and a deregistration procedure. As shown in FIG. 3, the procedure may include the following steps.

S301: A terminal device sends a registration request message to an AMF network element.

For example, no valid security context exists in the terminal device. Therefore, the registration request message sent by the terminal device is a plaintext message.

S302: The terminal device and the AMF network element perform an authentication procedure.

Specifically, through the authentication procedure, the terminal device and the AMF network element may create a same security context.

Herein, for specific implementation of the authentication procedure, refer to a conventional technology. Details are not described.

Optionally, before performing the authentication procedure, the terminal device and the AMF network element may further perform an identity authentication procedure. This is not specifically limited.

S303: The terminal device sends a deregistration request message to the AMF network element. Correspondingly, the AMF network element receives the deregistration request message.

For example, in a registration process of the terminal device, if the terminal device terminates a registration procedure due to some factors and starts a deregistration procedure, the terminal device may send the deregistration request message to the AMF network element.

S304: The AMF network element sends a security mode command message to the terminal device. Correspondingly, the terminal device receives the security mode command message.

It is assumed that the terminal device sends the deregistration request message and the AMF network element sends the security mode command message at the same time (or an interval between sending the two messages is short), resulting in a conflict between the security mode control procedure and the deregistration procedure.

S305: The terminal device enables a security context based on the security mode command message, and sends a security mode complete message to the AMF network element. Correspondingly, the AMF network element receives the security mode complete message.

S306: The AMF network element sends a deregistration accept message to the terminal device.

S307: The terminal device discards the deregistration accept message.

Because the security mode control procedure conflicts with the deregistration procedure, the AMF network element interrupts the security mode control procedure (that is, skips enabling the security context), and sends the deregistration accept message to the terminal device. The deregistration accept message is in plaintext. However, because the terminal device enables the security context, but the received deregistration accept message is a plaintext message, the terminal device discards the plaintext message. Consequently, the terminal device cannot complete deregistration, and cannot initiate a new round of registration.

It can be learned from this that when the security mode control procedure conflicts with the deregistration procedure, the terminal device enables a new security context, but the AMF network element skips enabling the new security context. That is, behavior of the terminal device is inconsistent with that of the AMF network element (used security contexts are inconsistent). Consequently, the deregistration procedure cannot be completed.

Based on this, an embodiment of this application provides a communication method, to resolve a problem that a terminal device cannot complete deregistration when a security mode control procedure conflicts with a deregistration procedure.

The following describes in detail embodiments of this application with reference to Embodiment 1 to Embodiment 5. It may be understood that the technical solutions provided in embodiments of this application may be applied to wireless communication between a plurality of communication devices. For example, the plurality of communication devices include a terminal device and a network device. The network device may be an AMF network element, or may be another device having a part or all of functions of the AMF network element. In embodiments of this application, unless otherwise specified, the "terminal device" may refer to the terminal device itself, or may refer to a part in the terminal device, for example, a chip or a chip system. The "network device" may refer to the network device itself, or may refer to a part in the network device, for example, a chip or a chip system.

### Embodiment 1

In Embodiment 1, when a security mode control procedure conflicts with a deregistration procedure, a network device may continue to use a protocol specification (that is, interrupt the security mode control procedure), and improve implementation on a terminal device side, to ensure that a terminal device completes deregistration.

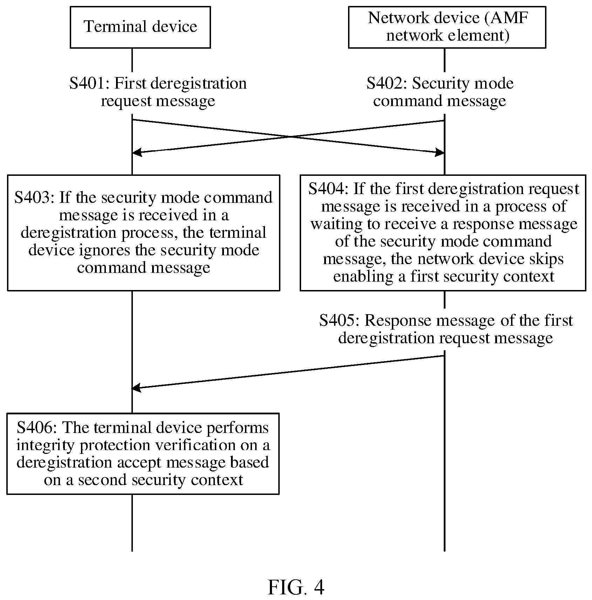

FIG. 4 is a diagram of a procedure corresponding to a communication method according to an embodiment of this application. As shown in FIG. 4, the procedure may include the following steps.

S401: A terminal device sends a first deregistration request message to a network device.

The first deregistration request message may be used to request deregistration of the terminal device, or may be used by the terminal device to request deregistration. Correspondingly, the network device receives the first deregistration request message.

For example, the terminal device may send the first deregistration request message to the network device in a registration procedure or a service procedure. A scenario in which the terminal device sends the first deregistration request message is not limited in this embodiment of this application.

The deregistration requested by the first deregistration request message may be normal deregistration. This is not limited.

S402: The network device sends a security mode command message to the terminal device.

The security mode command message may be used to enable a first security context. Correspondingly, the terminal device receives the security mode command message.

For example, for S401 and S402, from a perspective of the terminal device, the terminal device may receive the security mode command message from the network device after sending the first deregistration request message; and from a perspective of the network device, the network device may receive the first deregistration request message from the terminal device after sending the security mode command message. Similar descriptions in the following other embodiments (for example, S501 and S502 in Embodiment 2, S601 and S602 in Embodiment 3, and S701 and S702 in Embodiment 4) may be understood with reference to S401 and S402.

S403: If the security mode command message is received in a deregistration process, the terminal device ignores the security mode command message.

The deregistration process may be a deregistration procedure initiated by the terminal device by using the first deregistration request message, and belongs to the conventional technology. Details are not described.

In addition, that the security mode command message is received in the deregistration process of the terminal device may be understood or replaced with: A security mode control procedure of the terminal device conflicts with the deregistration procedure. That "the security mode command message is received in a deregistration process" may be replaced with another description, for example, replaced with "the security mode command message is received before the deregistration procedure ends". This is not limited.

For example, after receiving the security mode command message, the terminal device may determine whether the security mode command message is received in the deregistration process. There may be a plurality of specific implementations. For example, when starting the deregistration procedure (for example, sending the first deregistration request), the terminal device may enter a deregistration initiation state (or set a flag indicating that the deregistration procedure is being performed). When receiving the security mode command message, the terminal device determines whether the security mode command message is received in the deregistration process by determining whether the terminal device is in the deregistration initiation state. If the terminal device is in the deregistration initiation state, the security mode command message is received in the deregistration process; or if the terminal device is not in the deregistration initiation state, the security mode command message is not received in the deregistration process.

That "the terminal device ignores the security mode command message" may also be replaced with another description, for example, replaced with "the terminal device interrupts the security mode control procedure", or "the terminal device discards the security mode command message".

That the terminal device ignores the security mode command message may include: The terminal device skips sending a response message (for example, a security mode complete message) of the security mode command message, and/or skips enabling the first security context.

S404: If the first deregistration request message is received in a process of waiting to receive the response message of the security mode command message, the network device skips enabling a first security context.

After sending the security mode command message, the network device may wait to receive the response message of the security mode command message. If the network device receives the first deregistration request message in the process of waiting to receive the response message of the security mode command message, the network device may determine that the security mode control procedure conflicts with the deregistration procedure, and skips enabling the first security context. That the network device skips enabling the first security context may be replaced with that the network device interrupts the security mode control procedure.

For example, after sending the security mode command message, the network device may start a timer (duration of the timer is duration of waiting to receive the response message of the security mode command message). If the first deregistration request message is received during running of the timer, it may be determined that the first deregistration request message is received in the process of waiting to receive the response message of the security mode command message, that is, it is determined that the security mode control procedure conflicts with the deregistration procedure. A specific implementation in which the network device determines that the security mode control procedure conflicts with the deregistration procedure is not limited in this embodiment of this application.

Optionally, the foregoing method further includes the following steps.

S405: The network device sends a response message of the first deregistration request message to the terminal device. The response message of the first deregistration request message is a ciphertext message obtained based on a second security context.

For example, the response message of the first deregistration request message may be a deregistration accept message.

For example, a valid security context (for example, the second security context) exists in the network device and the terminal device. The network device and the terminal device may maintain, enable, or use the second security context, that is, the second security context remains valid. In this case, the network device performs integrity protection and encryption on a to-be-sent deregistration accept message based on the second security context, and sends the deregistration accept message to the terminal device. In this case, the deregistration accept message is a ciphertext message.

S406: The terminal device performs integrity protection verification on the deregistration accept message based on the second security context.

For example, when integrity protection verification performed on the deregistration accept message based on the second security context succeeds, the terminal device may decrypt the deregistration accept message based on the second security context, and after decryption succeeds, complete the deregistration procedure and enter a deregistration state. Optionally, when integrity protection verification performed on the deregistration accept message based on the second security context fails, the terminal device may perform local deregistration, or initiate a deregistration procedure again, for example, send a second deregistration request message to the network device.

According to the foregoing method, when the security mode control procedure conflicts with the deregistration procedure, both the terminal device and the network device may interrupt the security mode control procedure, and perform communication based on the second security context, so that behavior of the terminal device is consistent with that of the network device. This helps ensure that the terminal device completes deregistration.

It may be understood that "a valid security context exists in the network device and the terminal device" is used as an example above. In another example, no valid security context exists in the terminal device and the network device. In this case, S405 may be replaced with S405-a, and S406 may be replaced with S406-a.

S405-a: The network device sends a response message of the first deregistration request message to the terminal device. The response message of the first deregistration request message is a plaintext message.

S406-a: The terminal device receives the response message of the first deregistration request message, and enters a deregistration state.

According to the foregoing method, when the security mode control procedure conflicts with the deregistration procedure, both the terminal device and the network device may interrupt the security mode control procedure, and perform communication in a plaintext manner, so that behavior of the terminal device is consistent with that of the network device. This helps ensure that the terminal device completes deregistration.

### Embodiment 2

In Embodiment 2, when a security mode control procedure conflicts with a deregistration procedure, a network device may continue to use a protocol specification (that is, interrupt the security mode control procedure) or may not interrupt the security mode control procedure, and improve implementation on a terminal device side, to ensure that a terminal device completes deregistration.

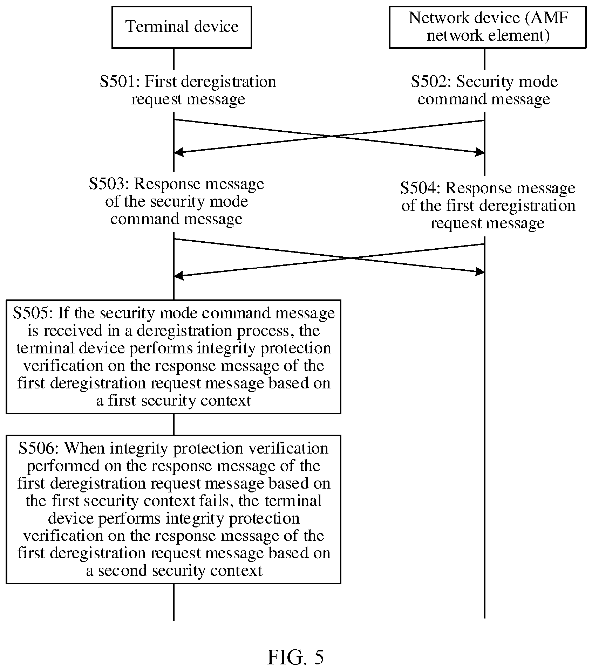

FIG. 5 is a diagram of a procedure corresponding to a communication method according to an embodiment of this application. As shown in FIG. 5, the procedure may include the following steps.

S501: A terminal device sends a first deregistration request message to a network device. The first deregistration request message is used to request deregistration. Correspondingly, the network device receives the first deregistration request message.

S502: The network device sends a security mode command message to the terminal device. The security mode command message is used to enable a first security context. Correspondingly, the terminal device receives the security mode command message.

S503: The terminal device sends a response message of the security mode command message to the network device based on the security mode command message, and enables the first security context. Correspondingly, the network device receives the response message of the security mode command message.

Herein, a sequence in which the terminal device enables the first security context and sends the response message of the security mode command message is not limited in this embodiment of this application.

S504: The network device sends a response message of the first deregistration request message to the terminal device. Correspondingly, the terminal device receives the response message of the first deregistration request message from the network device.

For example, the response message of the first deregistration request message may be a deregistration accept message.

For example, a valid security context (for example, a second security context) exists in the terminal device and the network device before the terminal device enables the first security context, and the second security context is a security context that has been enabled before the terminal device enables the first security context. Before the terminal device enables the first security context, the second security context is a current NAS security context. After the terminal device enables the first security context, the current NAS security context is switched to the first security context, and the second security context is a non-current NAS security context.

In this case, in a possible implementation, if the network device determines that the first deregistration request message is received in a process of waiting to receive the response message of the security mode command message, the network device may interrupt a security mode control procedure, that is, the network device may skip enabling the first security context. For example, the network device maintains the second security context to remain valid, performs processing (for example, integrity protection and encryption) on a to-be-sent deregistration accept message based on the second security context, and sends the deregistration accept message to the terminal device. The deregistration accept message is a ciphertext message.

In another possible implementation, if the network device determines that the first deregistration request message is received in a process of waiting to receive the response message of the security mode command message, the network device may continue the security mode control procedure, and enable the first security context after receiving the response message of the security mode command message. Then, the network device performs processing (for example, integrity protection and encryption) on a to-be-sent deregistration accept message based on the first security context, and sends the deregistration accept message to the terminal device. The deregistration accept message is a ciphertext message.

S505: If the security mode command message is received in a deregistration process, the terminal device performs integrity protection verification on the response message of the first deregistration request message based on the first security context.

S506: When integrity protection verification performed on the response message of the first deregistration request message based on the first security context fails, the terminal device performs integrity protection verification on the response message of the first deregistration request message based on the second security context.

For example, when integrity protection verification performed on the deregistration accept message based on the first security context succeeds, the terminal device may decrypt the deregistration accept message based on the first security context, and after decryption succeeds, complete a deregistration procedure and enter a deregistration state. When integrity protection verification performed on the deregistration accept message based on the first security context fails, the terminal device may perform integrity protection verification on the deregistration accept message based on the second security context.

Further, optionally, when integrity protection verification performed on the deregistration accept message based on the second security context succeeds, the terminal device may decrypt the deregistration accept message based on the second security context, and after decryption succeeds, complete the deregistration procedure and enter a deregistration state. When integrity protection verification performed on the deregistration accept message based on the second security context fails, the terminal device may perform local deregistration, or the terminal device initiates a deregistration procedure again, for example, sends a second deregistration request message to the network device.

According to the foregoing method, when the security mode control procedure conflicts with the deregistration procedure, the terminal device may attempt to perform integrity protection verification on the deregistration accept message based on the current NAS security context and the non-current NAS security context, so that a possibility that integrity protection verification performed on the deregistration accept message succeeds can be improved. This helps ensure that the terminal device completes deregistration.

In another example, S505 may be replaced with S505-a, and S506 may be replaced with S506-a.

S505-a: If the security mode command message is received in a deregistration process, the terminal device performs integrity protection verification on the response message of the first deregistration request message based on the second security context.

S506-a: When integrity protection verification performed on the response message of the first deregistration request message based on the second security context fails, the terminal device performs integrity protection verification on the response message of the first deregistration request message based on the first security context.

For example, when integrity protection verification performed on the deregistration accept message based on the second security context succeeds, the terminal device may decrypt the deregistration accept message based on the second security context, and after decryption succeeds, complete the deregistration procedure and enter a deregistration state. When integrity protection verification performed on the deregistration accept message based on the second security context fails, the terminal device may perform integrity protection verification on the deregistration accept message based on the first security context.

Further, optionally, when integrity protection verification performed on the deregistration accept message based on the first security context succeeds, the terminal device may decrypt the deregistration accept message based on the first security context, and after decryption succeeds, complete the deregistration procedure and enter a deregistration state. When integrity protection verification performed on the deregistration accept message based on the first security context fails, the terminal device may perform local deregistration, or the terminal device initiates a deregistration procedure again, for example, sends a second deregistration request message to the network device.

According to the foregoing method, when the security mode control procedure conflicts with the deregistration procedure, the terminal device may attempt to perform integrity protection verification on the deregistration accept message based on the current NAS security context and the non-current NAS security context, so that a possibility that integrity protection verification performed on the deregistration accept message succeeds can be improved. This helps ensure that the terminal device completes deregistration.

It may be understood that "a valid security context exists in the terminal device and the network device before the terminal device enables the first security context" is used as an example above. In another example, no valid security context exists in the terminal device and the network device before the terminal device enables the first security context. In this case, S504 may be replaced with S504-b, S505 may be replaced with S505-b, and S506 may be replaced with S506-b.

S504-b: The network device sends a response message of the first deregistration request message to the terminal device. Correspondingly, the terminal device receives the response message of the first deregistration request message from the network device.

For example, the response message of the first deregistration request message may be a deregistration accept message.

In a possible implementation, if the security mode control procedure conflicts with the deregistration procedure, the network device may interrupt the security mode control procedure, that is, the network device may skip enabling the first security context. For example, the network device may remain in plaintext, and send a deregistration accept message to the terminal device. The deregistration accept message is a plaintext message.

In another possible implementation, if the security mode control procedure conflicts with the deregistration procedure, the network device may continue the security mode control procedure, that is, the network device may enable the first security context. The network device performs processing (for example, integrity protection and encryption) on a to-be-sent deregistration accept message based on the first security context, and sends the deregistration accept message to the terminal device. The deregistration accept message is a ciphertext message.

S505-b: If the security mode command message is received in a deregistration process, and the response message of the first deregistration request message is a ciphertext message, the terminal device performs integrity protection verification on the response message of the first deregistration request message based on the first security context.

For example, when integrity protection verification performed on the response message of the first deregistration request message based on the first security context succeeds, the terminal device may decrypt the deregistration accept message based on the first security context, and after decryption succeeds, complete the deregistration procedure and enter a deregistration state. When integrity protection verification performed on the deregistration accept message based on the first security context fails, the terminal device may perform local deregistration, or the terminal device initiates a deregistration procedure again, for example, sends a second deregistration request message to the network device.

S506-b: If the security mode command message is received in a deregistration process, and the response message of the first deregistration request message is a plaintext message, the terminal device enters a deregistration state.

According to the foregoing method, when the security mode control procedure conflicts with the deregistration procedure, the terminal device may determine, based on whether the deregistration accept message is in plaintext, whether to perform integrity protection verification on the deregistration accept message based on the current NAS security context, so that the terminal device completes deregistration.

### Embodiment 3

In Embodiment 3, when a security mode control procedure conflicts with a deregistration procedure, a network device may continue to use a protocol specification (that is, interrupt the security mode control procedure), and improve implementation on a terminal device side, to ensure that a terminal device completes deregistration.

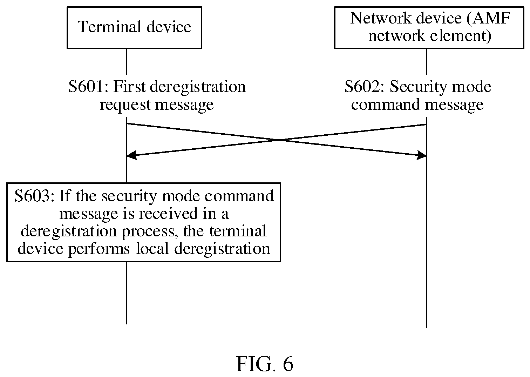

FIG. 6 is a diagram of a procedure corresponding to a communication method according to an embodiment of this application. As shown in FIG. 6, the procedure may include the following steps.

S601: A terminal device sends a first deregistration request message to a network device. The first deregistration request message is used to request deregistration. Correspondingly, the network device receives the first deregistration request message.

S602: The network device sends a security mode command message to the terminal device. The security mode command message is used to enable a first security context. Correspondingly, the terminal device receives the security mode command message.

S603: If the security mode command message is received in a deregistration process, the terminal device performs local deregistration.

In other words, if the security mode command message is received in the deregistration process, the terminal device may perform local deregistration without waiting for the deregistration accept message (or may ignore the deregistration accept message even if the deregistration accept message is received, that is, does not need to process the deregistration accept message), to help ensure that the terminal device completes deregistration.

For example, the terminal device may alternatively ignore the security mode command message, for example, the terminal device skips sending a response message (for example, a security mode complete message) of the security mode command message, and/or skips enabling the first security context.

According to the foregoing method, when a security mode control procedure conflicts with a deregistration procedure, the terminal device may perform local deregistration, to ensure that the terminal device completes deregistration.

### Embodiment 4

In Embodiment 4, when a security mode control procedure conflicts with a deregistration procedure, a terminal device may continue to use a protocol specification (that is, does not interrupt the security mode control procedure), and improve implementation on a network device side, to ensure that the terminal device completes deregistration.

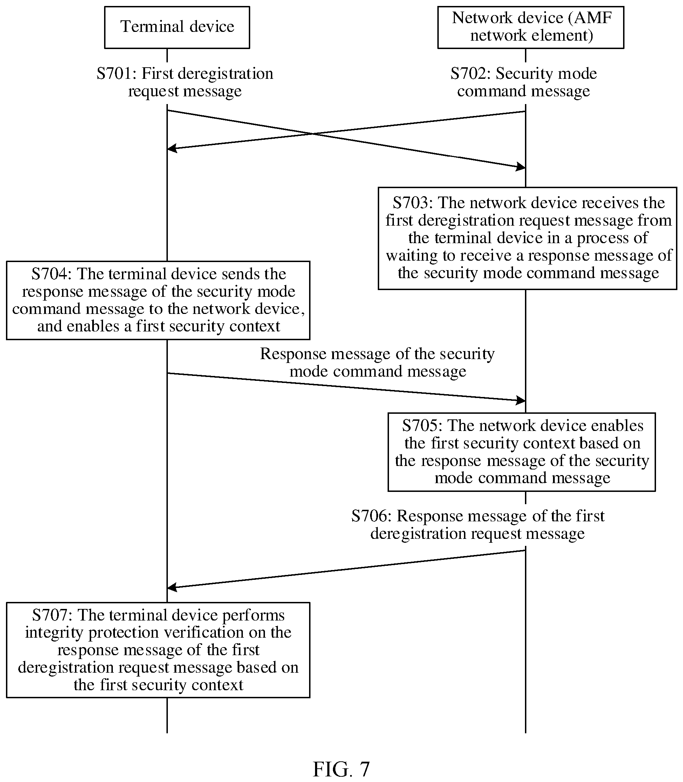

FIG. 7 is a diagram of a procedure corresponding to a communication method according to an embodiment of this application. As shown in FIG. 7, the procedure may include the following steps.

S701: A terminal device sends a first deregistration request message to a network device. The first deregistration request message is used to request deregistration.

S702: The network device sends a security mode command message to the terminal device. The security mode command message is used to enable a first security context. Correspondingly, the terminal device receives the security mode command message.

S703: The network device receives the first deregistration request message from the terminal device in a process of waiting to receive a response message of the security mode command message.

For example, after the network device receives the first deregistration request message from the terminal device in the process of waiting to receive the response message of the security mode command message, the network device may not interrupt a security mode control procedure, and continue waiting to receive the response message of the security mode command message.

In a possible implementation, the network device receives the first deregistration request message in the process of waiting to receive the response message of the security mode command message. If the first deregistration request message carries a first ciphertext information element, the network device may not interrupt the security mode control procedure, but continue waiting to receive the response message of the security mode command message. Optionally, if the first deregistration request message does not carry the first ciphertext information element, the network device may interrupt the security mode control procedure (for example, stop waiting to receive the response message of the security mode command message), or not interrupt the security mode control procedure.

S704: The terminal device sends the response message of the security mode command message to the network device, and enables the first security context. Correspondingly, the network device receives the response message of the security mode command message.

For example, the response message of the security mode command message may be a security mode complete message.

For example, if determining that the security mode control procedure conflicts with a deregistration procedure, the terminal device may not interrupt the security mode control procedure, send the response message of the security mode command message to the network device, and enable the first security context.

S705: The network device enables the first security context based on the response message of the security mode command message.

S706: The network device sends a response message of the first deregistration request message to the terminal device. The response message of the first deregistration request message is a ciphertext message obtained based on the first security context.

A specific occasion for enabling the first security context by the network device is not limited in this embodiment of this application. For example, the network device may enable the first security context when receiving the security mode complete message.

For example, the response message of the first deregistration request message may be a deregistration accept message. The network device performs processing (for example, integrity protection and encryption) on a to-be-sent deregistration accept message based on the first security context, and sends the deregistration accept message to the terminal device.

S707: The terminal device performs integrity protection verification on the response message of the first deregistration request message based on the first security context.

For example, if integrity protection verification performed on the deregistration accept message based on the first security context succeeds, the terminal device may decrypt the deregistration accept message based on the first security context, and after decryption succeeds, complete the deregistration procedure and enter a deregistration state. Optionally, if integrity protection verification performed on the deregistration accept message based on the first security context fails, the terminal device may perform local deregistration, or initiate a deregistration procedure again, for example, send a second deregistration request message to the network device.

According to the foregoing method, when the security mode control procedure conflicts with the deregistration procedure, neither the terminal device nor the network device interrupts the security mode control procedure, to ensure that the terminal device completes deregistration.

### Embodiment 5

In Embodiment 5, when a security mode control procedure conflicts with a deregistration procedure, a terminal device may determine, based on whether a first deregistration request message carries a first ciphertext information element (information element, IE), whether to interrupt the security mode control procedure, to ensure that the terminal device completes deregistration.

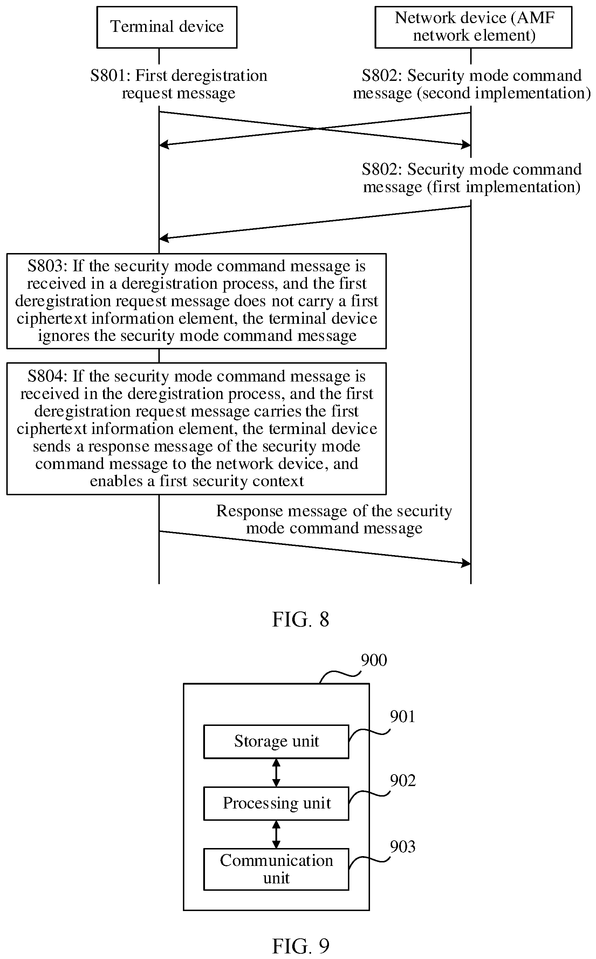

FIG. 8 is a diagram of a procedure corresponding to a communication method according to an embodiment of this application. As shown in FIG. 8, the procedure may include the following steps.

S801: A terminal device sends a first deregistration request message to a network device. The first deregistration request message is used to request deregistration. Correspondingly, the network device receives the first deregistration request message.

For example, if no valid security context exists in the terminal device, the first deregistration request message sent by the terminal device does not carry a first ciphertext information element. If a valid security context (namely, a second security context) exists in the terminal device, the first deregistration request message sent by the terminal device may carry the first ciphertext information element or not carry the first ciphertext information element. For example, if the terminal device needs to send important information or privacy-related information (for example, deregistration duration) to the network device, the terminal device may perform encryption and integrity protection on the plaintext information based on the second security context, to obtain the first ciphertext information element, and send the first ciphertext information element to the network device via the first deregistration request message.

The first ciphertext information element may be a non-clear IE. The first deregistration request message includes a non-access stratum message container (NAS MSG container), and the non-clear IE may be carried in the non-access stratum message container.

S802: The network device sends a security mode command message to the terminal device. The security mode command message is used to enable a first security context. Correspondingly, the terminal device receives the security mode command message.

From a perspective of the network device, in a first implementation, the first deregistration request message carries the first ciphertext information element, and after receiving the first deregistration request message, the network device sends the security mode command message to the terminal device because the network device fails to perform integrity protection verification on the first ciphertext information element. For example, when the first deregistration request message carries the first ciphertext information element, if security contexts used by the network device and the terminal device are inconsistent due to some possible factors (for example, a valid security context exists in the terminal device, but no valid security context exists in the network device), after receiving the first deregistration request message, the network device may fail to perform integrity protection verification on the first ciphertext information element. Therefore, the network device may send the security mode command message to the terminal device, so that the security contexts used by the network device and the terminal device are consistent.

Optionally, before the network device sends the security mode command message to the terminal device, the network device and the terminal device may perform an authentication procedure, so that the network device and the terminal device each create a new security context (for example, the first security context).

In a second implementation, before receiving the first deregistration request message, the network device sends the security mode command message to the terminal device. There are a plurality of triggering factors for the network device to send the security mode command message. This is not specifically limited.

It can be learned from the foregoing two implementations that the network device may send the security mode command message to the terminal device because the network device fails to perform integrity protection verification on the first ciphertext information element; or may send the security mode command message to the terminal device due to other factors.

From a perspective of the terminal device, after receiving the security mode command message, the terminal device may perform S803 or S804.

S803: If the security mode command message is received in a deregistration process, and the first deregistration request message does not carry the first ciphertext information element, the terminal device ignores the security mode command message.

For example, for a related implementation in which the terminal device ignores the security mode command message, refer to Embodiment 1 or Embodiment 3. Details are not described again.

S804: If the security mode command message is received in a deregistration process, and the first deregistration request message carries the first ciphertext information element, the terminal device sends a response message of the security mode command message to the network device, and enables the first security context.

For example, when the first deregistration request message carries the first ciphertext information element, if the terminal device receives the security mode command message in the deregistration process, it is possible that the network device sends the security mode command message to the terminal device because the network device fails to perform integrity protection verification on the first ciphertext information element after receiving the first deregistration request message, or it is possible that the network device sends the security mode command message to the terminal device before receiving the first deregistration request message. Because the terminal device cannot determine whether the network device sends the security mode command message because the network device fails to perform integrity protection verification on the first ciphertext information element, to prevent the terminal device from interrupting a security mode control procedure triggered by the network device because the network device fails to perform integrity protection verification on the first ciphertext information element, when the first deregistration request message carries the first ciphertext information element, the terminal device may send the response message (for example, a security mode complete message) of the security mode command message, and enable the first security context.

The security mode complete message may carry a second ciphertext information element, and the second ciphertext information element and the first ciphertext information element correspond to same plaintext information. In other words, the terminal device may perform encryption and integrity protection on the plaintext information (for example, the important information or the privacy-related information) based on the first security context, to obtain the second ciphertext information element, and send the second ciphertext information element to the network device via the security mode complete message.

The following separately describes implementation after S803 or S804 with reference to Case 1 and Case 2.

### (1) Case 1:

In Case 1, it is assumed that in S802, the network device sends the security mode command message because the network device fails to perform integrity protection verification on the first ciphertext information element (namely, the first implementation).

From the perspective of the network device, the network device may enable the first security context based on the security mode complete message, and perform integrity protection verification on the second ciphertext information element based on the first security context. Further, after integrity protection verification and decryption on the second ciphertext information element based on the first security context succeeds, the network device may obtain the plaintext information corresponding to the second ciphertext information element. Further, the network device may send a deregistration accept message to the terminal device. The deregistration accept message is a ciphertext message processed based on the first security context.

From the perspective of the terminal device, after receiving the deregistration accept message, the terminal device may attempt to perform integrity protection verification on the deregistration accept message based on the first security context and the second security context. Refer to the descriptions in Embodiment 2.

### (2) Case 2:

In Case 2, it is assumed that in S802, the network device sends the security mode command message due to another factor (a factor other than the failure of integrity protection verification performed on the first ciphertext information element) (namely, the second implementation).

For implementation in this case, refer to the descriptions in Embodiment 2. For example, the network device may interrupt the security mode control procedure, or may not interrupt the security mode control procedure, and the terminal device may attempt to perform integrity protection verification on the deregistration accept message based on the first security context and the second security context.

It may be understood that the foregoing is described by using an example in which "when the first deregistration request message does not carry the first ciphertext information element, the terminal device ignores the security mode command message (that is, interrupts the security mode control procedure)". In another embodiment, when the first deregistration request message does not carry the first ciphertext information element, the terminal device may alternatively not interrupt the security mode control procedure. For details, refer to the descriptions in Embodiment 2 or Embodiment 4.

For the foregoing plurality of embodiments, it may be understood that:
(1) In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment. In addition, in a same embodiment, mutual reference may also be made between different implementations or different examples.
(2) Various numbers in this application are merely used for differentiation for ease of description, but are not used to limit the protection scope of this application. The step numbers in the foregoing flowcharts are merely an example of execution procedures, and do not constitute a limitation on an execution sequence of the steps. That is, the step numbers do not mean an execution sequence, and the execution sequence of the steps should be determined based on functions and internal logic of the steps. In addition, not all steps shown in each flowchart are necessarily performed steps, and some steps may be added or deleted for each flowchart based on an actual requirement.

The foregoing mainly describes the solutions provided in embodiments of this application from a perspective of interaction between the terminal device and the network device. It may be understood that, to implement the foregoing functions, the terminal device and the network device may include corresponding hardware structures and/or software modules for performing the functions. A person skilled in the art should be easily aware that, in combination with units and algorithm steps of the examples described in embodiments disclosed in this specification, embodiments of this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, functional units of the terminal device and the network device may be obtained through division based on the foregoing method examples. For example, each functional unit may be obtained through division based on each corresponding function, or two or more functions may be integrated into one unit. The integrated unit may be implemented in a form of hardware, or may be implemented in a form of a software functional unit.

When the integrated unit is used, FIG. 9 is a possible example block diagram of an apparatus according to an embodiment of this application. As shown in FIG. 9, the apparatus 900 may include a processing unit 902 and a communication unit 903. The processing unit 902 is configured to control and manage an action of the apparatus 900. The communication unit 903 is configured to support the apparatus 900 in communicating with another device. Optionally, the communication unit 903 is also referred to as a transceiver unit, and may include a receiving unit and/or a sending unit, respectively configured to perform a receiving operation and a sending operation. The apparatus 900 may further include a storage unit 901, configured to store program code and/or data of the apparatus 900.
(1) The apparatus 900 may be the terminal device in the foregoing embodiments (for example, Embodiment 1 to Embodiment 5). The processing unit 902 may support the apparatus 900 in performing an action of the terminal device in the foregoing method embodiments. Alternatively, the processing unit 902 mainly performs an internal action of the terminal device in the method embodiments, and the communication unit 903 may support the apparatus 900 in communicating with another device.

For example, in an embodiment, the communication unit 903 is configured to: send a first deregistration request message to a network device, where the first deregistration request message is used by the terminal device to request deregistration; receive a security mode command message from the network device, where the security mode command message is used to enable a first security context; send a response message of the security mode command message to the network device based on the security mode command message, and enable the first security context; and receive a response message of the first deregistration request message from the network device. The processing unit 902 is configured to: if the security mode command message is received in a deregistration process, perform integrity protection verification on the response message of the first deregistration request message based on the first security context; and when integrity protection verification performed on the response message of the first deregistration request message based on the first security context fails, perform integrity protection verification on the response message of the first deregistration request message based on a second security context, where the second security context is a security context that has been enabled before the terminal device enables the first security context.

In a possible design, the processing unit 902 is further configured to: if integrity protection verification performed on the response message of the first deregistration request message based on the second security context fails, perform local deregistration. Alternatively, the communication unit 903 is further configured to: if integrity protection verification performed on the response message of the first deregistration request message based on the second security context fails, send a second deregistration request message to the network device, where the second deregistration request message is used by the terminal device to request deregistration.

In another embodiment, the communication unit 903 is configured to: send a first deregistration request message to a network device, where the first deregistration request message is used by the terminal device to request deregistration; receive a security mode command message from the network device, where the security mode command message is used to enable a first security context; send a response message of the security mode command message to the network device based on the security mode command message, and enable the first security context; and receive a response message of the first deregistration request message from the network device. If the security mode command message is received in a deregistration process, the processing unit 902 is configured to perform integrity protection verification on the response message of the first deregistration request message based on a second security context, where the second security context is a security context that has been enabled before the terminal device enables the first security context.

In a possible design, the processing unit 902 is further configured to: if integrity protection verification performed on the response message of the first deregistration request message based on the second security context fails, perform integrity protection verification on the response message of the first deregistration request message based on the first security context.

In a possible design, the processing unit 902 is further configured to: if integrity protection verification performed on the response message of the first deregistration request message based on the first security context fails, perform local deregistration. Alternatively, the communication unit 903 is further configured to: if integrity protection verification performed on the response message of the first deregistration request message based on the first security context fails, send a second deregistration request message to the network device, where the second deregistration request message is used by the terminal device to request deregistration.

(2) The apparatus 900 may be the network device in the foregoing embodiments (for example, Embodiment 1 to Embodiment 5). The processing unit 902 may support the apparatus 900 in performing an action of the network device in the foregoing method embodiments. Alternatively, the processing unit 902 mainly performs an internal action of the network device in the method embodiments, and the communication unit 903 may support the apparatus 900 in communicating with another device.

For example, in an embodiment, the communication unit 903 is configured to: send a security mode command message to a terminal device, where the security mode command message is used to enable a first security context; receive a first deregistration request message from the terminal device, where the first deregistration request message is used by the terminal device to request deregistration; and receive a response message of the security mode command message from the terminal device. The processing unit 902 is configured to enable the first security context based on the response message of the security mode command message. The communication unit 903 is further configured to send a response message of the first deregistration request message to the terminal device, where the response message of the first deregistration request message is a ciphertext message obtained based on the first security context.

For example, in another embodiment, the communication unit 903 is configured to: receive a first deregistration request message from a terminal device, where the first deregistration request message is used by the terminal device to request deregistration, and the first deregistration request message carries a first ciphertext information element; if integrity protection verification performed on the first ciphertext information element based on a second security context fails, send a security mode command message to the terminal device, where the security mode command message is used to enable a first security context; and receive a response message of the security mode command message from the terminal device. The processing unit 902 is configured to enable the first security context based on the response message of the security mode command message. The communication unit 903 is further configured to send a response message of the first deregistration request message to the terminal device, where the response message of the first deregistration request message is a ciphertext message obtained based on the first security context.

In a possible design, the response message of the security mode command message includes a second ciphertext information element, the second ciphertext information element and the first ciphertext information element correspond to same plaintext information, and the second ciphertext information element is obtained based on the first security context.

In a possible design, the communication unit 903 is further configured to send an authentication request message to the terminal device, where the authentication request message is used to request the terminal device to create the first security context.

It should be understood that division into the unit in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, the unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. In an implementation process, operations in the foregoing methods or the foregoing units may be implemented by using a hardware integrated logic circuit in the processor element or may be implemented in a form in which the processing element invokes software.

In an example, a unit in any one of the foregoing apparatuses may be one or more integrated circuits configured to implement the foregoing methods, for example, one or more application-specific integrated circuits (application-specific integrated circuits, ASICs), one or more microprocessors (digital signal processors, DSPs), one or more field programmable gate arrays (field programmable gate arrays, FPGAs), or a combination of at least two of these forms of integrated circuits. For another example, when the unit in the apparatus may be implemented in a form in which a processing element schedules a program, the processing element may be a processor, for example, a general-purpose central processing unit (central processing unit, CPU) or another processor that can invoke the program. For another example, the units may be integrated and implemented in a form of an SoC.

The foregoing unit configured for receiving is an interface circuit of the apparatus, and is configured to receive a signal from another apparatus. For example, when the apparatus is implemented in a form of a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented in a form of a chip, the sending unit is an interface circuit that is of the chip and that is configured to send a signal to another chip or apparatus.

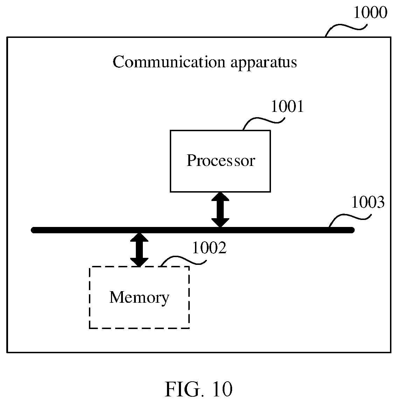

Based on the foregoing embodiments, an embodiment of this application further provides a communication apparatus. Refer to FIG. 10. The communication apparatus 1000 may include a processor 1001. Optionally, the communication apparatus 1000 may further include a memory 1002. The memory 1002 may be disposed inside the communication apparatus 1000, or may be disposed outside the communication apparatus 1000. Optionally, the communication apparatus 1000 may further include a transceiver (not shown in FIG. 10 currently).

Specifically, the processor 1001 may be a central processing unit (central processing unit, CPU), a network processor (network processor, NP), or a combination of the CPU and the NP. The processor 1001 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable logic gate array (field programmable gate array, FPGA), a generic array logic (generic array logic, GAL), or any combination thereof.

The processor 1001 and the memory 1002 are connected to each other. Optionally, the processor 1001 and the memory 1002 are connected to each other through a bus 1003. The bus 1003 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is for representing the bus in FIG. 10, but this does not mean that there is only one bus or only one type of bus.

In an optional implementation, the memory 1002 is configured to store a program and the like. Specifically, the program may include program code, and the program code includes computer operation instructions. The memory 1002 may include a RAM, and may further include a non-volatile memory (non-volatile memory), for example, one or more disk memories. The processor 1001 executes an application program stored in the memory 1002 to implement the foregoing function, to implement a function of the communication apparatus 1000.

For example, the communication apparatus 1000 may be the terminal device in the foregoing embodiments, or may be the network device in the foregoing embodiments.

In an embodiment, when the communication apparatus 1000 implements a function of the terminal device in the foregoing method embodiments, the transceiver may implement receiving and sending operations performed by the terminal device in the foregoing method embodiments; and the processor 1001 may implement an operation in the foregoing method embodiments other than the receiving and sending operations performed by the terminal device. Specifically, for related specific descriptions, refer to related descriptions in the foregoing embodiments. Details are not described herein again.

In another embodiment, when the communication apparatus 1000 implements a function of the network device in the foregoing method embodiments, the transceiver may implement receiving and sending operations performed by the network device in the foregoing method embodiments; and the processor 1001 may implement an operation in the foregoing method embodiments other than the receiving and sending operations performed by the network device. Specifically, for related specific descriptions, refer to related descriptions in the foregoing embodiments. Details are not described herein again.

An embodiment of this application further provides a communication system. The communication system includes the terminal device and the network device in the foregoing embodiments.

The terms "system" and "network" may be used interchangeably in embodiments of this application. "At least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists, where A and B may be singular or plural. The character "/" usually indicates an "or" relationship between the associated objects. "At least one of the following items (pieces)" or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

The computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A communication method, wherein the method is applied to a terminal device or a chip in the terminal device, and the method comprises:
sending a first deregistration request message to a network device, wherein the first deregistration request message is used by the terminal device to request deregistration;
receiving a security mode command message from the network device, wherein the security mode command message is used to enable a first security context;
sending a response message of the security mode command message to the network device based on the security mode command message, and enabling the first security context;
receiving a response message of the first deregistration request message from the network device;
if the security mode command message is received in a deregistration process, performing integrity protection verification on the response message of the first deregistration request message based on the first security context; and
when integrity protection verification performed on the response message of the first deregistration request message based on the first security context fails, performing integrity protection verification on the response message of the first deregistration request message based on a second security context, wherein the second security context is a security context that has been enabled before the terminal device enables the first security context.

2. The method according to claim 1, wherein the method further comprises:
if integrity protection verification performed on the response message of the first deregistration request message based on the second security context fails, performing local deregistration; or
if integrity protection verification performed on the response message of the first deregistration request message based on the second security context fails, sending a second deregistration request message to the network device, wherein the second deregistration request message is used by the terminal device to request deregistration.

3. A communication method, wherein the method is applied to a terminal device or a chip in the terminal device, and the method comprises:
sending a first deregistration request message to a network device, wherein the first deregistration request message is used by the terminal device to request deregistration;
receiving a security mode command message from the network device, wherein the security mode command message is used to enable a first security context;
sending a response message of the security mode command message to the network device based on the security mode command message, and enabling the first security context;
receiving a response message of the first deregistration request message from the network device; and
if the security mode command message is received in a deregistration process, performing integrity protection verification on the response message of the first deregistration request message based on a second security context, wherein the second security context is a security context that has been enabled before the terminal device enables the first security context.

4. The method according to claim 3, wherein the method further comprises:
if integrity protection verification performed on the response message of the first deregistration request message based on the second security context fails, performing integrity protection verification on the response message of the first deregistration request message based on the first security context.

5. The method according to claim 4, wherein the method further comprises:
if integrity protection verification performed on the response message of the first deregistration request message based on the first security context fails, performing local deregistration; or
if integrity protection verification performed on the response message of the first deregistration request message based on the first security context fails, sending a second deregistration request message to the network device, wherein the second deregistration request message is used by the terminal device to request deregistration.

6. A communication method, wherein the method is applied to a terminal device or a chip in the terminal device, and the method comprises:
sending a first deregistration request message to a network device, wherein the first deregistration request message is used by the terminal device to request deregistration;
receiving a security mode command message from the network device, wherein the security mode command message is used to enable a first security context;
sending a response message of the security mode command message to the network device based on the security mode command message, and enabling the first security context;
receiving a response message of the first deregistration request message from the network device; and
if the security mode command message is received in a deregistration process, and the response message of the first deregistration request message is a ciphertext message, performing integrity protection verification on the response message of the first deregistration request message based on the first security context; or
if the security mode command message is received in the deregistration process, and the response message of the first deregistration request message is a plaintext message, entering a deregistration state.

7. A communication method, wherein the method is applied to a terminal device or a chip in the terminal device, and the method comprises:
sending a first deregistration request message to a network device, wherein the first deregistration request message is used by the terminal device to request deregistration;
receiving a security mode command message from the network device, wherein the security mode command message is used to enable a first security context; and
if the security mode command message is received in a deregistration process and the first deregistration request message does not carry a first ciphertext information element, ignoring the security mode command message; or
if the security mode command message is received in the deregistration process and the first deregistration request message carries the first ciphertext information element, sending a response message of the security mode command message to the network device, and enabling the first security context.

8. The method according to claim 7, wherein the ignoring the security mode command message comprises:
skipping enabling the first security context, and/or skipping sending the response message of the security mode command message.

9. The method according to claim 7 or 8, wherein when the ignoring the security mode command message is performed, the method further comprises:
receiving a response message of the first deregistration request message from the network device; and
when the response message of the first deregistration request message is a ciphertext message, performing integrity protection verification on the response message based on an enabled second security context of the terminal device; or
when the response message of the first deregistration request message is a plaintext message, entering a deregistration state.

10. The method according to claim 7, wherein when the enabling the first security context is performed, the method further comprises:
receiving a response message of the first deregistration request message from the network device;
performing integrity protection verification on the response message of the first deregistration request message based on the first security context; and
when integrity protection verification performed on the response message of the first deregistration request message based on the first security context fails, performing integrity protection verification on the response message of the first deregistration request message based on a second security context, wherein the second security context is a security context that has been enabled before the terminal device enables the first security context.

11. The method according to claim 10, wherein the method further comprises:
if integrity protection verification performed on the response message of the first deregistration request message based on the second security context fails, performing local deregistration; or
if integrity protection verification performed on the response message of the first deregistration request message based on the second security context fails, sending a second deregistration request message to the network device, wherein the second deregistration request message is used by the terminal device to request deregistration.

12. The method according to claim 7, wherein when the enabling the first security context is performed, the method further comprises:
receiving a response message of the first deregistration request message from the network device; and
performing integrity protection verification on the response message of the first deregistration request message based on a second security context, wherein the second security context is a security context that has been enabled before the terminal device enables the first security context.

13. The method according to claim 12, wherein the method further comprises:
if integrity protection verification performed on the response message of the first deregistration request message based on the second security context fails, performing integrity protection verification on the response message of the first deregistration request message based on the first security context.

14. The method according to claim 13, wherein the method further comprises:
if integrity protection verification performed on the response message of the first deregistration request message based on the first security context fails, performing local deregistration; or
if integrity protection verification performed on the response message of the first deregistration request message based on the first security context fails, sending a second deregistration request message to the network device, wherein the second deregistration request message is used by the terminal device to request deregistration.

15. The method according to claim 7, wherein when the enabling the first security context is performed, the method further comprises:
receiving a response message of the first deregistration request message from the network device; and
when the response message of the first deregistration request message is a ciphertext message, performing integrity protection verification on the response message of the first deregistration request message based on the first security context; or
when the response message of the first deregistration request message is a plaintext message, entering a deregistration state.

16. The method according to any one of claims 7 to 15, wherein the response message of the security mode command message comprises a second ciphertext information element, the second ciphertext information element and the first ciphertext information element correspond to same plaintext information, and the second ciphertext information element is obtained based on the first security context.

17. A communication method, wherein the method is applied to a network device or a chip in the network device, and the method comprises:
sending a security mode command message to a terminal device, wherein the security mode command message is used to enable a first security context;
receiving a first deregistration request message from the terminal device in a process of waiting to receive a response message of the security mode command message, wherein the first deregistration request message is used by the terminal device to request deregistration;
receiving the response message of the security mode command message from the terminal device;
enabling the first security context based on the response message of the security mode command message; and
sending a response message of the first deregistration request message to the terminal device, wherein the response message of the first deregistration request message is a ciphertext message obtained based on the first security context.

18. The method according to claim 17, wherein the method further comprises:
if the first deregistration request message carries a first ciphertext information element, continuing waiting to receive the response message of the security mode command message.

19. A communication method, wherein the method is applied to a network device or a chip in the network device, and the method comprises:
receiving a first deregistration request message from a terminal device, wherein the first deregistration request message is used by the terminal device to request deregistration, and the first deregistration request message carries a first ciphertext information element;
if integrity protection verification performed on the first ciphertext information element based on a second security context fails, sending a security mode command message to the terminal device, wherein the security mode command message is used to enable a first security context;
receiving a response message of the security mode command message from the terminal device;
enabling the first security context based on the response message of the security mode command message; and
sending a response message of the first deregistration request message to the terminal device, wherein the response message of the first deregistration request message is a ciphertext message obtained based on the first security context.

20. The method according to claim 19, wherein the response message of the security mode command message comprises a second ciphertext information element, the second ciphertext information element and the first ciphertext information element correspond to same plaintext information, and the second ciphertext information element is obtained based on the first security context.

21. The method according to claim 19 or 20, wherein the method further comprises:
sending an authentication request message to the terminal device, wherein the authentication request message is used to request the terminal device to create the first security context.

22. A communication system, wherein the system comprises a network device and a terminal device;
the terminal device is configured to perform the method according to any one of claims 1 to 16; and
the network device is configured to: send the security mode command message to the terminal device; and send a response message of the first deregistration request message to the terminal device.

23. A communication system, wherein the system comprises a network device and a terminal device;
the network device is configured to perform the method according to any one of claims 17 to 21; and
the terminal device is configured to: send the first deregistration request message to the network device; and send a response message of the security mode command message to the network device.

24. A communication apparatus, comprising a module configured to perform the method according to any one of claims 1 to 21.

25. A communication apparatus, comprising a processor, wherein the processor is coupled to a memory, the memory stores a computer program, and the processor is configured to invoke a part or all of the computer program in the memory, to cause the method according to any one of claims 1 to 21 to be performed.

26. A computer-readable storage medium, wherein the storage medium stores a computer program, and when a part or all of the computer program is executed by a computer, the method according to any one of claims 1 to 21 is caused to be performed.

27. A computer program product, wherein when a computer reads and executes the computer program product, the method according to any one of claims 1 to 21 is caused to be performed.
